# EUROPÄISCHE PATENTANMELDUNG

(11) **EP 3 970 933 A1**
(43) Veröffentlichungstag der Anmeldung: **23.03.2022**
(21) Anmeldenummer: 21198232.7
(22) Anmeldetag: 22.09.2021
(51) Int. Cl.: B29B 7/48, B29B 7/60, B29B 7/90, B29B 9/06, B29B 9/14, B29B 9/16, B29C 48/285, B29C 64/00, B29C 48/00

(54) **VERFAHREN ZUR HERSTELLUNG EINES GRANULATS, GRANULAT, 3D-DRUCKVERFAHREN, VERFAHREN ZUR HERSTELLUNG EINES KERAMISCHEN BAUTEILS UND KERAMISCHES BAUTEIL**

(30) Priorität: 22.09.2020 DE 102020124639
(71) Anmelder: Deutsches Zentrum für Luft- und Raumfahrt e.V., 53227 Bonn (DE)
(72) Erfinder: Gottschalk, Nicole, 53227 Bonn (DE); Marigo, Gloria, 53227 Bonn (DE); Friedrich, Lion, 53227 Bonn (DE); Zancan, Elia, 53227 Bonn (DE)
(74) Vertreter: Hoeger, Stellrecht & Partner Patentanwälte mbB

(57) **Zusammenfassung**

Es wird ein Verfahren zur Herstellung eines Granulats (100) bereitgestellt, wobei gemäß dem Verfahren ein Bindematerial (102), ein Weichmachermaterial und/oder ein grenzflächenaktives Material (104) und ein oder mehre Füllstoffe (112) gemischt werden, wobei ein Compoundmaterial entsteht, wobei das Compoundmaterial (118) extrudiert wird und wobei das extrudierte Compoundmaterial (118) unter Ausbildung des Granulats (100) zerkleinert wird.

## Beschreibung

Die vorliegende Erfindung betrifft ein Verfahren zur Herstellung eines Granulats.

Ferner betrifft die vorliegende Erfindung ein Granulat, welches ein Coating aufweist.

Weiter betrifft die Erfindung ein 3D-Druckverfahren, insbesondere zur Herstellung eines Grünkörpers für eine Keramisierung.

Ferner betrifft die vorliegende Erfindung ein Verfahren zur Herstellung eines keramischen Bauteils sowie ein keramisches Bauteil, hergestellt nach dem erfindungsgemäßen Verfahren.

Die WO 2017/019511 A1 offenbart thermoplastische Polymerkomposite und entsprechende Herstellungsverfahren.

Die US 2019/0389090 A1 offenbart ein flexibles 3D-Druck-Rohstoffmaterial.

Die US 2015/0080495 A1 offenbart ein Filament zur Verwendung bei einem additiven Herstellungssystem.

Die EP 1 785 446 A1 offenbart Multischicht-Pellets.

Die nicht vorveröffentlichte DE 10 2019 108 968 A1 offenbart ein Verfahren zur Herstellung eines Granulats.

Die US 2019/0299522 A1 offenbart eine Düse zur Ablage von faserverstärkten Polymer.

Der vorliegenden Erfindung liegt die Aufgabe zugrunde, ein Verfahren bereitzustellen, mit welchem sich ein Granulat möglichst einfach herstellen lässt, welches sich in einem extrusionsbasierten Verfahren 3D-drucken lässt und mit welchem sich ein Grünkörper herstellen lässt, der zur späteren Keramisierung geeignet ist.

Diese Aufgabe wird durch ein Verfahren zur Herstellung eines Granulats gemäß Anspruch 1 gelöst.

Ein Bindematerial, ein Weichmachermaterial und ein oder mehrere Füllstoffe werden gemischt, wobei ein Compoundmaterial entsteht.

Ergänzend oder alternativ zu dem Weichmachermaterial wird ein grenzflächenaktives Material, insbesondere ein Tensid, verwendet.

Das Compoundmaterial wird extrudiert.

Es kann vorgesehen sein, dass zunächst das Weichmachermaterial und/oder das grenzflächenaktive Material und das Bindematerial vermischt und/oder miteinander gemischt werden.

Alternativ kann auch zunächst eine Mischung aus dem Bindematerial und dem einen oder einem oder mehreren der Füllstoffen hergestellt oder bereitgestellt werden und anschließend das Weichmachermaterial und/oder das grenzflächenaktive Material hinzugegeben werden.

Insbesondere werden das Weichmachermaterial und/oder das grenzflächenaktive Material unter Raumdruck (ungefähr 1 bar) und/oder Raumtemperatur (ungefähr 20 °C) hinzugegeben. Ein aufwändiges Zugabeverfahren, beispielsweise durch Sprühen, ist entbehrlich.

Vorzugsweise wird ein Bindematerial in granularer Form, beispielsweise ein Bindematerialgranulat, verwendet.

Insbesondere bilden das Weichmachermaterial und/oder das grenzflächenaktive Material ein Coating auf dem Bindematerial und/oder auf einer Mischung aus dem Bindematerial und dem einen oder den mehreren Füllstoffen.

Das Coating kann beispielsweise eine teilweise oder vollständige Beschichtung des Bindematerials mit dem Weichmachermaterial und/oder dem grenzflächenaktiven Material sein.

Beispielsweise ist das Bindematerial teilweise oder vollständig von dem Weichmachermaterial und/oder dem grenzflächenaktiven Material benetzt und/oder umhüllt.

Das Bindematerial, beispielsweise das Bindematerialgranulat, welches insbesondere das Coating aufweist, wird vorzugsweise mit einem oder mehreren Füllstoffen gemischt und/oder vermischt und ein daraus resultierendes Compoundmaterial wird extrudiert.

Zum Mischen und/oder Vermischen des Bindematerials, welches das insbesondere das Coating aufweist, und des einen oder der mehreren Füllstoffe werden polymere Komponenten des Bindematerials und/oder des Weichmachermaterials vorzugsweise aufgeschmolzen.

Es kann vorgesehen sein, dass einer oder mehrere der Füllstoffe bereits mit dem Bindematerial vermischt bereitgestellt werden.

Das extrudierte Compoundmaterial wird unter Ausbildung des Granulats zerkleinert, beispielsweise pelletiert.

Durch die Verwendung des Weichmachermaterials und/oder des grenzflächenaktiven Materials kann eine Fließfähigkeit des resultierenden Granulats optimiert werden. Hieraus resultiert insbesondere eine verbesserte Druckbarkeit des Granulats in einem 3D-Druckverfahren.

Durch die Ausbildung des Coatings des Weichmachermaterials und/oder des grenzflächenaktiven Materials an dem und/oder auf dem Bindematerial kann, insbesondere in einem nachfolgenden oder vorhergehenden Mischungsschritt mit dem einen oder den mehreren Füllstoffen, eine homogene Verteilung des Weichmachermaterials und/oder des grenzflächenaktiven Materials in dem Granulat ausgebildet werden.

Im resultierenden Granulat ist das Bindematerial vorzugsweise vollständig von dem Weichmachermaterial und/oder dem grenzflächenaktiven Material durchsetzt. Insbesondere ist das Weichmachermaterial homogen und/oder gleichmäßig im gesamten Bindematerial verteilt.

Vorteilhaft kann es sein, wenn das Weichmachermaterial Polyethylenglykol umfasst oder daraus gebildet ist.

Insbesondere können sich Moleküle des Weichmachermaterials um Moleküle, beispielsweise Polymere, des Bindematerials herumlegen und/oder sich an diese anlagern. Das Weichmachermaterial kann ein Vorbeigleiten der Moleküle des Bindematerials aneinander fördern und/oder begünstigen.

Vorzugsweise umfasst das grenzflächenaktive Material Stearinsäure oder ist daraus gebildet.

Insbesondere umhüllen Moleküle des grenzflächenaktiven Materials den einen oder die mehreren Füllstoffe. So lassen sich der eine oder die mehreren Füllstoffe vorzugsweise besser mit dem Bindematerial vermischen.

Vorzugsweise sind das Weichmachermaterial und/oder das grenzflächenaktive Material in dem Granulat homogen mit dem Bindematerial vermischt und/oder homogen in dem Granulat verteilt.

In Ausführungsformen, in welchen das Weichmachermaterial Polyethylenglykol umfasst oder daraus gebildet ist, wird insbesondere Polyethylenglykol verwendet, welches eine Molekülmasse von ungefähr 200 g/mol oder mehr und/oder ungefähr 6000 g/mol oder weniger aufweist.

Vorzugsweise beträgt ein Anteil des Weichmachermaterials ungefähr 1 Gew. % oder mehr und/oder ungefähr 5 Gew.-% oder weniger, bezogen auf eine Gesamtmasse des Bindematerials.

Vorzugsweise beträgt ein Anteil des grenzflächenaktiven Materials ungefähr 1 Gew. % oder mehr und/oder ungefähr 5 Gew.-% oder weniger, bezogen auf die Gesamtmasse des Bindematerials.

In Ausführungsformen, in welchen sowohl ein Weichmachermaterial als auch ein grenzflächenaktives Material verwendet werden, beträgt deren Anteil insgesamt vorzugsweise ungefähr 1 Gew. % oder mehr und/oder ungefähr 5 Gew.-% oder weniger, bezogen auf die Gesamtmasse des Bindematerials.

Beispielsweise werden das Weichmachermaterial und/oder das grenzflächenaktive Material in einem Lösungsmittel oder Lösungsmittelgemisch gelöst und/oder damit verdünnt, bevor es mit dem Bindematerial oder dem Bindematerial und dem einen oder den mehreren Füllstoffen vermischt wird.

Beispielsweise wird ein Lösungsmittelgemisch von Ethanol und Wasser verwendet.

Bei Weichmachermaterialien und/oder grenzflächenaktiven Materialien, die in einem Bereich von ungefähr 20 °C bis ungefähr 80 °C flüssig sind, werden diese vorzugsweise unverdünnt verwendet. Beispielsweise ist Polyethylenglykol, welches eine Molekülmasse von ungefähr 200 g/mol aufweist, und Stearinsäure im genannten Temperaturbereich flüssig.

Eine Mischung aus dem Bindematerial und dem Weichmachermaterial und/oder dem grenzflächenaktiven Material wird insbesondere getrocknet, wobei das Coating aus dem Weichmachermaterial und/oder dem grenzflächenaktiven Material ausgebildet wird. Beispielsweise wird die Mischung aus dem Bindematerial und dem Weichmachermaterial und/oder dem grenzflächenaktiven Material bei ungefähr 40 °C oder mehr und/oder bei ungefähr 60 °C oder weniger getrocknet.

Als Trocknungszeit haben sich ungefähr 3 Stunden bis ungefähr 6 Stunden als ausreichend erwiesen.

Vorteilhaft kann es sein, wenn das Bindematerial ein thermoplastisches Polymermaterial, insbesondere ein Ethylen-Vinylacetat-Copolymer (EVA), umfasst oder daraus gebildet ist. Ein Anteil des Bindematerials beträgt vorzugsweise ungefähr 20 Gew.-% oder mehr und/oder ungefähr 35 Gew.-% oder weniger, bezogen auf eine Gesamtmasse des Granulats.

Alternativ können auch andere Polyolefin-Verbindungen, insbesondere Polyethylen-Verbindungen, verwendet werden, welche sich in einem Temperaturbereich von ungefähr 140 °C bis ungefähr 250 °C aufschmelzen lassen.

Günstig kann es sein, wenn der eine oder die mehreren Füllstoffe Kohlenstoffbasierte Füllstoffe sind. Insbesondere sind der eine oder die mehreren Füllstoffe ausgewählt aus einem oder mehreren der folgenden Materialien: Carbon Black, pulverförmiges Siliziumcarbid (SiC), Kohlenstofffasern, Aktivkohle.

Bei den Kohlenstofffasern handelt es sich vorzugsweise um gemahlene Kohlenstofffasern.

Carbon Black wird vorzugsweise in einem Anteil von bis zu 35 Gew.-%, insbesondere ungefähr 15 Gew.-% bis ungefähr 20 Gew.-%, bezogen auf die Gesamtmasse des Granulats eingesetzt.

Anstelle von Carbon Black können auch andere elektrisch leitfähige Partikel eingesetzt werden.

Das pulverförmige Siliziumcarbid weist vorzugsweise eine mittlere Korngröße dₛ₅₀ von ungefähr 4 µm bis ungefähr 5 µm, insbesondere ungefähr 4,5 µm, auf.

Pulverförmiges Siliziumcarbid - im Folgenden auch als Siliziumcarbid-Pulver bezeichnet - hat insbesondere einen geringen Einfluss auf die Viskosität des aufgeschmolzenen thermoplastischen Bindemittels während des 3D-Druckverfahrens.

Die Korngröße dₛ₅₀ ist vorzugsweise auf den Median der Durchmesserverteilung der Siliziumcarbid-Partikel des pulverförmigen Siliziumcarbids bezogen.

Vorzugsweise werden ungefähr 35 Gew.-% oder mehr Siliziumcarbid-Pulver, bezogen auf eine Gesamtmasse des Granulats eingesetzt.

Insbesondere werden ungefähr 45 Gew.-% oder weniger Siliziumcarbid-Pulver, bezogen auf die Gesamtmasse des Granulats eingesetzt.

Vorzugsweise sind der eine oder einer oder mehrere der Füllstoffe Nanofüllstoffe und/oder Mikrofüllstoffe, welche einen mittleren Durchmesser von ungefähr 60 µm oder weniger aufweisen.

Gemäß einer bevorzugten Zusammensetzung umfasst das Granulat die folgenden Substanzen oder ist daraus gebildet: ein Ethylen-Vinylacetat-Copolymer (EVA), Carbon Black, pulverförmiges Siliziumcarbid (SiC), gemahlene Kohlenstofffasern, Aktivkohle, Polyethylenglykol.

Gemäß einer weiteren bevorzugten Zusammensetzung umfasst das Granulat die folgenden Substanzen oder ist daraus gebildet: ein Ethylen-Vinylacetat-Copolymer (EVA), Carbon Black, pulverförmiges Siliziumcarbid (SiC), gemahlene Kohlenstofffasern, Aktivkohle, Stearinsäure.

Vorzugsweise werden zur Herstellung des Compoundmaterials dessen polymere Bestandteile in einer aufgeheizten Schneckenvorrichtung aufgeschmolzen. Insbesondere werden sämtliche Bestandteile des Compoundmaterials in einer Extrusionsvorrichtung miteinander vermischt.

Die Schneckenvorrichtung umfasst beispielsweise einen Doppelschneckenextruder.

Insbesondere beträgt eine Scherviskosität eines Granulatmaterials bei einer Scherrate von ungefähr 100 1/s bei 160 °C ungefähr 1,5 × 10³ Pa·s oder weniger. Das Granulatmaterial bezeichnet hierbei das Material, aus welchem das Granulat gebildet ist.

Vorteilhaft kann es sein, wenn das extrudierte Compoundmaterial getrocknet wird, insbesondere unmittelbar bevor es in einem 3D-Druckverfahren verwendet wird.

Eine Trocknungstemperatur, bei welcher das extrudierte Compoundmaterial getrocknet wird, beträgt vorzugsweise ungefähr 40 °C oder mehr und/oder ungefähr 60 °C oder weniger.

Die Erfindung betrifft ferner ein Granulat für 3D-Druckverfahren.

Das Granulat umfasst ein Bindematerial, ein Weichmachermaterial und/oder ein grenzflächenaktives Material und einen oder mehrere Füllstoffe oder ist daraus gebildet. Vorzugsweise ist das Granulat nach einem erfindungsgemäßen Verfahren hergestellt.

Eines oder mehrere Merkmale und/oder einer oder mehrere Vorteile des erfindungsgemäßen Verfahrens zur Herstellung eines Granulats gelten für das erfindungsgemäße Granulat vorzugsweise gleichermaßen.

Die Erfindung betrifft ferner ein 3D-Druckverfahren, insbesondere zur Herstellung eines Grünkörpers für eine Keramisierung.

Ein Granulat wird nach dem erfindungsgemäßen Verfahren hergestellt oder ein erfindungsgemäßes Granulat wird verwendet.

Das Granulat wird in einem additiven Verfahren 3D-gedruckt, wobei ein Formkörper, insbesondere ein Grünkörper für eine Keramisierung, gebildet wird.

Durch die Herstellung des Grünkörpers in einem 3D-Druckverfahren ist eine Herstellung von endkonturnahen Grünkörpern und insbesondere von anschließend daraus hergestellten endkonturnahen keramischen Bauteilen möglich. Dies ist ein deutlicher Vorteil gegenüber herkömmlichen Verfahren, wie beispielsweise Sintern, Carbothermische Reduktion, Pyrolyse und Gasphasenverfahren, bei welchen Bauteile zur weiteren Formgebung mechanisch nachbearbeitet werden müssen.

Eines oder mehrere Merkmale und/oder einer oder mehrere Vorteile des erfindungsgemäßen Verfahrens zur Herstellung eines Granulats gelten für das erfindungsgemäße 3D-Druckverfahren vorzugsweise gleichermaßen.

Günstig kann es sein, wenn das 3D-Drucken mittels einer 3D-Druckvorrichtung durchgeführt wird, welche einen Druckkopf umfasst, und wenn das Granulat in den Druckkopf eingefüllt wird und zum 3D-Drucken mittels eines Extrusionselements, welches in dem Druckkopf angeordnet ist, aufgeschmolzen wird.

Vorzugsweise wird das 3D-Drucken mittels eines extrusionsbasierten Verfahrens durchgeführt, wobei vorzugsweise eine Druckdüse einen Durchmesser von ungefähr 0,2 mm oder mehr, insbesondere ungefähr 0,25 mm oder mehr, aufweist.

Insbesondere weist die Druckdüse einen Durchmesser von ungefähr 0,8 mm oder weniger, insbesondere von ungefähr 0,5 mm oder weniger, auf.

Durch die optimierte Viskosität des Materials des Granulats (Granulatmaterial) können mehrere Parameter während des 3D-Druckverfahrens variiert werden, beispielsweise eine Schichthöhe und/oder der Durchmesser der Druckdüse, ohne dass eine Qualität des Grünkörpers vermindert ist.

Die Druckdüse bildet vorzugsweise einen Bestandteil des Druckkopfes.

Die Erfindung betrifft ferner ein Verfahren zur Herstellung eines keramischen Bauteils.

Es wird ein Grünkörper gemäß einem erfindungsgemäßen 3D-Druckverfahren hergestellt.

Der Grünkörper wird pyrolysiert, wobei ein offenporöser Kohlenstoffkörper resultiert.

Es wird eine Keramisierung an dem aus der Pyrolyse resultierenden offenporösen Kohlenstoffkörper durchgeführt.

In Ausführungsformen, in welchen das Granulat ein Weichmachermaterial enthält, kann es vorteilhaft sein, wenn der Grünkörper vor einer weiteren Verwendung gewaschen wird, beispielsweise mit Wasser.

Günstig kann es sein, wenn der Grünkörper in ein Wasserbad getaucht wird, vorzugsweise für ungefähr 3 Stunden oder mehr, insbesondere für ungefähr 5 Stunden oder mehr, beispielsweise für ungefähr 6 Stunden.

Hierbei kann das Weichmachermaterial, beispielsweise Polyethylenglykol, aus dem Grünkörper herausgelöst werden.

Vorzugsweise wird das Weichmachermaterial, beispielsweise Polyethylenglykol, bei einer Temperatur von ungefähr 40 °C oder mehr und/oder ungefähr 80 °C oder weniger aus dem Grünkörper herausgewaschen und/oder herausgelöst.

Beispielsweise wird Polyethylenglykol bei ungefähr 60 °C aus dem Grünkörper herausgewaschen und/oder herausgelöst.

So kann insbesondere eine offene Porosität des Grünkörpers erhöht werden, beispielsweise um 3 % oder mehr. Beispielsweise wird eine offene Porosität des Grünkörpers von ungefähr 0,7 % (vor dem Waschen) auf ungefähr 4 % (nach dem Waschen) erhöht.

Durch das Waschen können Blisteringeffekte reduziert werden.

Durch die Verwendung des in dem 3D-Druckverfahren hergestellten Grünkörpers beträgt ein Schrumpf vorzugsweise ungefähr 5 % oder weniger.

Vorteilhaft kann es sein, wenn eine Masse des offenporösen Kohlenstoffkörpers nach der Pyrolyse ungefähr 50 Gew.-% oder mehr der Masse des Grünkörpers vor der Pyrolyse beträgt.

Günstig kann es sein, wenn der offenporöse Kohlenstoffkörper zur Keramisierung in einem 170 Gew.-%igen bis 200 Gew.-%igen Überschuss, bezogen auf die Masse des offenporösen Kohlenstoffkörpers, mit einem Carbidbildner in Kontakt gebracht wird. Vorzugsweise wird der offenporöse Kohlenstoffkörper bei dem in Kontakt bringen mit dem Carbidbildner infiltriert.

Ein besonders bevorzugter Carbidbildner ist Silizium.

Die Erfindung betrifft ferner ein keramisches Bauteil, hergestellt nach einem erfindungsgemäßen Verfahren.

Erfindungsgemäß hergestellte keramische Bauteile eignen sich insbesondere für optische Bauteile und/oder Bauteile für Satelliten oder andere Flugkörper.

Weitere Verwendungsgebiete sind keramische Wärmeübertrager und Widerstandsheizelemente.

Ein Anteil an Carbid in dem keramischen Bauteil beträgt vorzugsweise ungefähr 70 Vol.-% oder mehr, insbesondere ungefähr 75 Vol.-% oder mehr, beispielsweise ungefähr 80 Vol.-%, bezogen auf ein Gesamtvolumen des keramischen Bauteils.

Ein Anteil an freiem Carbidbildner liegt insbesondere bei ungefähr 30 Vol.-% oder weniger, insbesondere ungefähr 25 Vol.-% oder weniger, beispielsweise ungefähr 20 Vol.-% oder weniger.

Das keramische Bauteil weist insbesondere kaum oder keine Kohlenstoffrückstände auf.

Ein Anteil an freiem Carbidbildner, beispielsweise Silizium, in dem keramischen Bauteil beträgt vorzugsweise ungefähr 15 Vol.-% oder weniger, insbesondere ungefähr zehn Vol.-% oder weniger.

Weitere bevorzugte Merkmale und/oder Vorteile der Erfindung sind Gegenstand der nachfolgenden Beschreibung und der zeichnerischen Darstellung von Ausführungsbeispielen.

Es zeigen:
- Figur 1: ein schematischer Ablauf einer Ausführungsform eines Verfahrens zur Herstellung eines Granulats;
- Figur 2: eine schematische Darstellung einer Ausführungsform eines 3D-Druckverfahrens;
- Figur 3: eine schematische Darstellung eines Ablaufs einer Ausführungsform eines Verfahrens zur Keramisierung;
- Figur 4: eine schematische Draufsicht auf eine Ausführungsform eines keramischen Bauteils, wobei das Bauteil eine Wabenstruktur aufweist und versteift ist;
- Figur 5: eine schematische Seitenansicht des Bauteils aus Figur 4;
- Figur 6: eine schematische Draufsicht auf eine weitere Ausführungsform eines Bauteils, bei welchem ein durch 3D-Druck hergestellter Grünkörper keramisiert wurde, in einem Zustand nach der Keramisierung;
- Figur 7: eine schematische Seitenansicht auf das Bauteil aus Figur 6;
- Figur 8: ein mit einem Rasterelektronenmikroskop aufgenommenes Schliffbild eines Querschnitts eines Stegs einer Wabenstruktur bei 500-facher Vergrößerung; und
- Figur 9: ein Diagramm, welches Scherviskositäten von Granulatmaterialien unterschiedlicher Zusammensetzung in Abhängigkeit der Scherrate zeigt.

Gleiche oder funktional äquivalente Elemente sind in sämtlichen Figuren mit denselben Bezugszeichen bezeichnet.

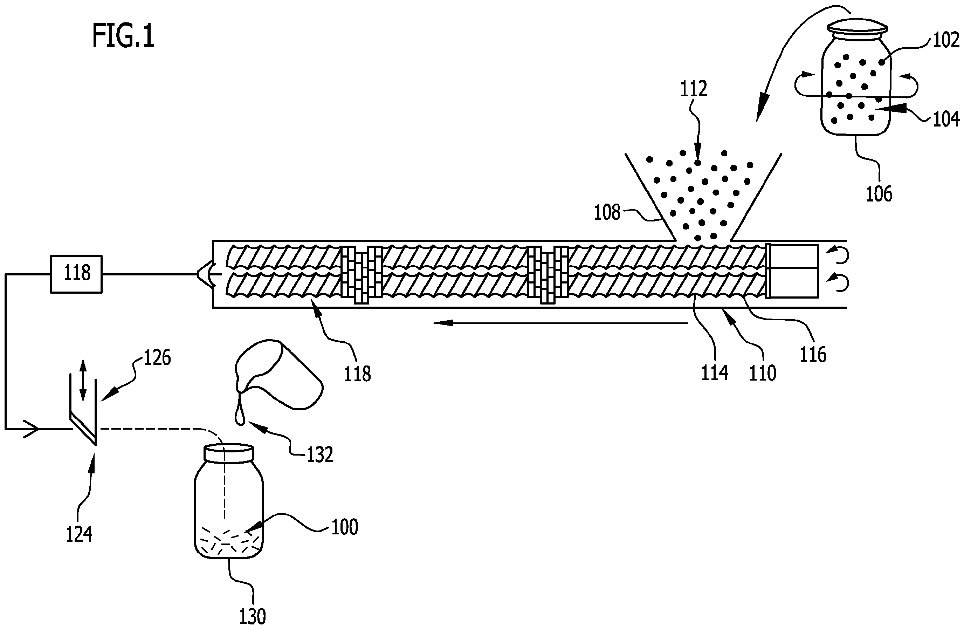

In Figur 1 ist ein schematischer Ablauf einer bevorzugten Ausführungsform eines Verfahrens zur Herstellung eines Granulats 100 gezeigt. Das Granulat 100 eignet sich zur Verwendung in einem 3D-Druckverfahren zur Herstellung eines Grünkörpers 164 für eine Keramisierung.

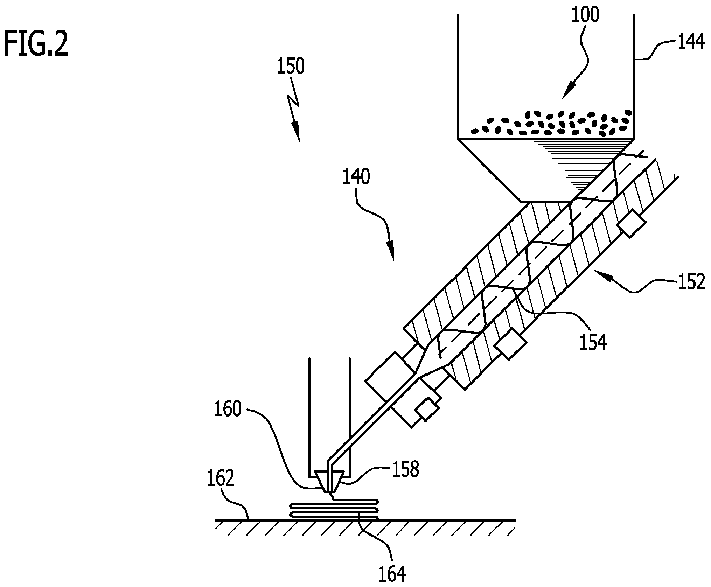

Das durch das im Zusammenhang mit Figur 1 beschriebene Verfahren hergestellte Granulat 100 wird vorliegend (wie im Zusammenhang mit Figur 2 beschrieben) in einem 3D-Druckverfahren weiterverarbeitet, wodurch ein Grünkörper 164 entsteht.

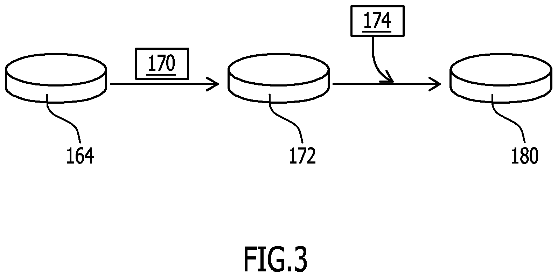

Dieser Grünkörper 164 wird anschließend (wie im Zusammenhang mit Figur 3 beschrieben) einer Keramisierung unterzogen, wodurch ein keramisches Bauteil 180 hergestellt wird.

Auch, wenn die Herstellung des Granulats 100, das 3D-Druckverfahren und das Verfahren zur Keramisierung nachfolgend zusammenhängend beschrieben werden, sind sie auch unabhängig voneinander durchführbar.

Zu den Verfahren im Einzelnen:
Es wird ein Bindematerial 102 mit einem Weichmachermaterial und/oder einem grenzflächenaktiven Material 104 in einem Behälter 106 vermischt. Der Behälter 106 kann beispielsweise ein Trommelmischer sein.

Vorliegend wird ein Bindematerialgranulat als Bindematerial 102 verwendet.

Als Bindematerial 102 ist ein thermoplastisches Polymermaterial bevorzugt. Beispielsweise wird ein Ethylen-Vinylacetat-Copolymer (EVA) mit einem Vinylacetatanteil von ungefähr 14 Gew.-% verwendet.

Alternativ können auch andere Polyolefin-Verbindungen, insbesondere Polyethylen-Verbindungen, verwendet werden, welche sich in einem Temperaturbereich von ungefähr 140 °C bis ungefähr 250 °C aufschmelzen lassen. Die Temperatur, auf welche eine (später noch beschriebene) Extrusionsvorrichtung 110 aufgeheizt wird, muss dann dementsprechend angepasst werden.

Ein Anteil des Weichmachermaterial 104 beträgt vorzugsweise ungefähr 1 Gew.-% oder mehr und/oder ungefähr 5 Gew.-% oder weniger, bezogen auf eine Gesamtmasse des Bindematerials 102.

In Ausführungsformen, in welchen ein grenzflächenaktives Material 104 verwendet wird, beträgt dessen Anteil vorzugsweise ungefähr 1 Gew.-% oder mehr und/oder ungefähr 5 Gew.-% oder weniger, bezogen auf die Gesamtmasse des Bindematerials 102.

In Ausführungsformen, in welchen sowohl ein Weichmachermaterial 104 als auch ein grenzflächenaktives Material 104 verwendet wird, beträgt deren Anteil (gemeinsam) vorzugsweise ungefähr 1 Gew.-% oder mehr und/oder ungefähr 5 Gew.-% oder weniger, bezogen auf die Gesamtmasse des Bindematerials 102.

Zur besseren Verarbeitbarkeit des Weichmachermaterials und/oder des grenzflächenaktiven Materials 104 werden vorliegend das Weichmachermaterial und/oder das grenzflächenaktive Material 104 in einem Lösungsmittel oder einem Lösungsmittelgemisch aufgelöst und anschließend zu dem Bindematerial 102 hinzugegeben.

Als Lösungsmittelgemisch wird vorliegend eine Mischung aus Ethanol und Wasser in einem Volumenverhältnis von ungefähr 70 zu 30 verwendet. Beispielsweise wird das Bindematerial 102 bei einer Temperatur von ungefähr 40 °C bis ungefähr 60 °C in dem Lösungsmittelgemisch gelöst.

Bei Weichmaterialien und/oder grenzflächenaktiven Materialien 104, welche bei einer Temperatur von ungefähr 20 °C bis ungefähr 80 °C flüssig sind, ist das Lösen vorzugsweise entbehrlich und/oder das Weichmaterial und/oder grenzflächenaktive Material 104 wird unverdünnt mit dem Bindematerial 102 vermischt.

Anschließend wird eine resultierende Mischung, welche das Bindematerial 102 und das Weichmachermaterial und/oder das grenzflächenaktive Material 104 umfasst, getrocknet.

Als Trocknungstemperatur hat sich eine Temperatur in einem Bereich von ungefähr 40 °C bis ungefähr 60 °C, beispielsweise ungefähr 50 °C, als bevorzugt erwiesen. Eine Trocknungszeit variiert vorliegend in einem Bereich von ungefähr 3 Stunden bis ungefähr 6 Stunden.

Hieraus entsteht ein Coating aus dem Weichmachermaterial und/oder dem grenzflächenaktiven Material 104 auf dem und/oder an dem Bindematerial 102, vorliegend dem Bindematerialgranulat.

Das Bindematerial 102, welches das Coating aus dem Weichmachermaterial und/oder dem grenzflächenaktiven Material 104 aufweist, wird anschließend über einen Trichter 108 in eine Extrusionsvorrichtung 110 gegeben und/oder gefüllt.

Zuvor und/oder zeitgleich und/oder danach werden mehrere Füllstoffe 112, vorliegend mittels einer als Doppelschneckenvorrichtung 114 ausgebildeten Schneckenvorrichtung 116, untergemischt und entlang einer Längsrichtung der Extrusionsvorrichtung 110 befördert.

Aufgrund von dicht nebeneinander angeordneten helikal ausgebildeten Knetelementen, welche im Wesentlichen die Doppelschneckenvorrichtung 114 bilden, wird eine homogene Vermischung des Bindematerials 102 und des Weichmachermaterials und/oder des grenzflächenaktiven Materials 104 erreicht, welche in der Extrusionsvorrichtung 110 aufgeschmolzen werden.

Die Extrusionsvorrichtung 110 ist hierzu mittels einer nicht dargestellten Heizvorrichtung auf ungefähr 180 °C bis 200 °C aufgeheizt.

In unterschiedlichen Bearbeitungsabschnitten sind vorliegend die beiden Knetelemente der Doppelschneckenvorrichtung 114 über exzentrisch zueinander angeordnete Knetscheiben voneinander getrennt, wodurch sich eine Vermischung weiter verbessern lässt.

Die Füllstoffe 112 werden durch die Extrusionsvorrichtung 110 vorzugsweise homogen in einem polymeren Matrixmaterial verteilt, sodass ein Compoundmaterial 118 entsteht.

Das polymere Matrixmaterial umfasst vorliegend das Bindematerial 102 und das Weichmachermaterial 104 oder ist daraus gebildet.

Vorliegend werden folgende Füllstoffe 112 verwendet:
- Carbon Black;
- Siliziumcarbid-Pulver;
- gemahlene Kohlenstofffasern; und
- Aktivkohle.

Anstelle von Carbon Black können auch andere elektrisch leitfähige Füllstoffe verwendet werden.

Sämtliche Füllstoffe 112 haben vorliegend einen Durchmesser von ungefähr 60 µm oder weniger.

Nach einer Vermischung wird das resultierende Compoundmaterial 118 mittels eines Hotmelt-Verfahrens, vorliegend bei ungefähr 180 °C bis ungefähr 200 °C, zu einem Filament extrudiert.

Vorliegend wird das Filament in einem Pelletierer 126, dessen Messer hier schematisch angedeutet sind und während der Zerkleinerung rotieren, zu dem Granulat 100 zerkleinert. Einzelne Partikel des Granulats 100 weisen vorliegend eine durchschnittliche Länge von ungefähr 3 mm bis ungefähr 4 mm, beispielsweise ungefähr 2 mm, auf.

Vorliegend wird das Granulat 100 nach der Zerkleinerung durch den Pelletierer 126 in einem Behälter 130 aufgefangen.

Das Granulat 100 wird insbesondere vor einer Verwendung in einem 3D-Druckverfahren getrocknet, beispielsweise bei ungefähr 40 °C bis ungefähr 60 °C. Eine Trocknungszeit beträgt vorzugsweise mindestens 3 Stunden.

Eine besonders bevorzugte Zusammensetzung des Granulats 100 ist die folgende:
- 31,5 Gew.-% Ethylen-Vinylacetat-Copolymer (EVA);
- 1,6 Gew.-% PEG200
- 16,9 Gew.-% Carbon Black;
- 40 Gew.-% Siliziumcarbid-Pulver; und
- 10 Gew.-% gemahlene Kohlenstofffasern und Aktivkohle in einem Gewichtsverhältnis von 2:1.

Unter PEG200 ist ein Polyethylenglykol zu verstehen, welches eine Molekülmasse von 200 g/mol aufweist.

Alternativ zu PEG200 können beispielsweise PEG1000 (Polyethylenglykol mit einer Molekülmasse von 1000), PEG4000 (Polyethylenglykol mit Molekülmasse von 1000) oder Stearinsäure oder Mischungen daraus verwendet werden.

Das Weichmachermaterial und/oder das grenzflächenaktive Material 104 dient insbesondere einer optimierten Scherviskosität des Granulatmaterials (Materials des Granulats 100).

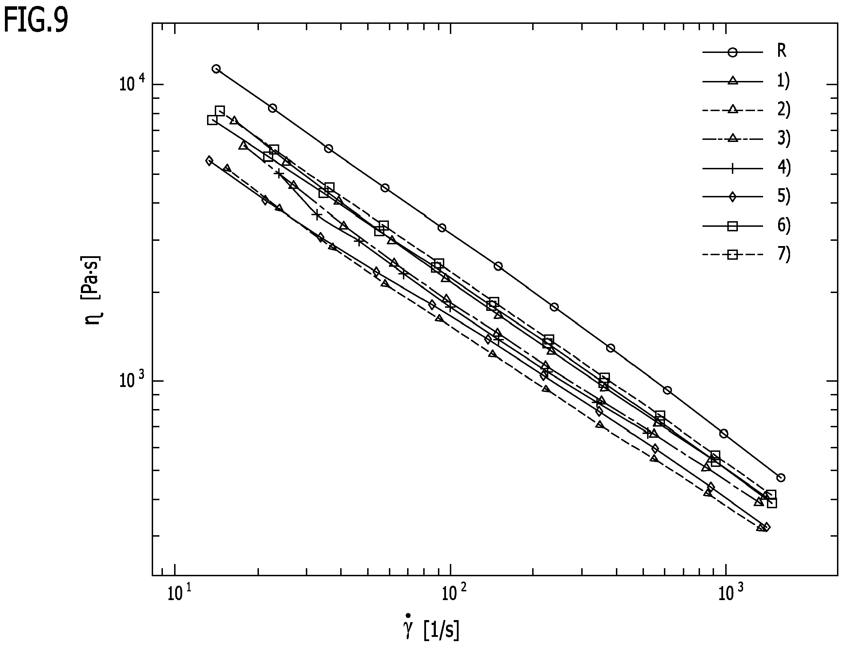

In Figur 9 ist ein Diagramm von Scherviskositäten von Granulatmaterialien gezeigt, welche voneinander verschiedene Anteile an Weichmachermaterial und/oder grenzflächenaktives Material 104 und/oder voneinander verschiedene Materialien (Weichmachermaterial/grenzflächenaktives Material) 104 aufweisen.

Auf der x-Achse ist dabei eine Scherrate in 1/s aufgetragen. Auf der y-Achse ist eine Scherviskosität η in Pa·s aufgetragen.

Graph R zeigt eine Scherviskosität eines Referenzmaterials in Abhängigkeit der Scherrate. Das Referenzmaterial umfasst 60 Gew.-% eines Bindematerials in Form von EVA und ungefähr 40 Gew.-% Füllstoffe, bezogen auf eine Gesamtmasse des Referenzmaterials.

Graph 1) zeigt eine Scherviskosität eines Granulatmaterials in Abhängigkeit der Scherrate. Das Granulatmaterial umfasst ein Bindematerial 102 (in Form von EVA), ungefähr 40 Gew.-% Füllstoffe 112 (bezogen auf die Gesamtmasse des Granulatmaterials) und ein Weichmachermaterial 104 in Form von PEG200 in einem Anteil von ungefähr 1 Gew.-%, bezogen auf eine Gesamtmasse des Bindematerials 102.

Graph 2) zeigt eine Scherviskosität eines Granulatmaterials in Abhängigkeit der Scherrate. Das Granulatmaterial umfasst ein Bindematerial 102 (in Form von EVA), ungefähr 40 Gew.-% Füllstoffe 112 (bezogen auf die Gesamtmasse des Granulatmaterials) und ein Weichmachermaterial 104 in Form von PEG200 in einem Anteil von ungefähr 5 Gew.-%, bezogen auf eine Gesamtmasse des Bindematerials 102.

Graph 3) zeigt eine Scherviskosität eines Granulatmaterials in Abhängigkeit der Scherrate. Das Granulatmaterial umfasst ein Bindematerial 102 (in Form von EVA), ungefähr 50 Gew.-% Füllstoffe 112 (bezogen auf die Gesamtmasse des Granulatmaterials) und ein Weichmachermaterial 104 in Form von PEG200 in einem Anteil von ungefähr 5 Gew.-%, bezogen auf eine Gesamtmasse des Bindematerials 102.

Graph 4) zeigt eine Scherviskosität eines Granulatmaterials in Abhängigkeit der Scherrate. Das Granulatmaterial umfasst ein Bindematerial 102 (in Form von EVA), ungefähr 40 Gew.-% Füllstoffe 112 (bezogen auf die Gesamtmasse des Granulatmaterials) und ein Weichmachermaterial 104 in Form von PEG1000 in einem Anteil von ungefähr 1 Gew.-%, bezogen auf eine Gesamtmasse des Bindematerials 102.

Graph 5) zeigt eine Scherviskosität eines Granulatmaterials in Abhängigkeit der Scherrate. Das Granulatmaterial umfasst ein Bindematerial 102 (in Form von EVA), ungefähr 40 Gew.-% Füllstoffe 112 (bezogen auf die Gesamtmasse des Granulatmaterials) und ein Weichmachermaterial 104 in Form von PEG4000 in einem Anteil von ungefähr 1 Gew.-%, bezogen auf eine Gesamtmasse des Bindematerials 102.

Graph 6) zeigt eine Scherviskosität eines Granulatmaterials in Abhängigkeit der Scherrate. Das Granulatmaterial umfasst ein Bindematerial 102 (in Form von EVA), ungefähr 40 Gew.-% Füllstoffe 112 (bezogen auf die Gesamtmasse des Granulatmaterials) und ein grenzflächenaktives Material 104 in Form von Stearinsäure in einem Anteil von ungefähr 1 Gew.-%, bezogen auf eine Gesamtmasse des Bindematerials 102.

Graph 7) zeigt eine Scherviskosität eines Granulatmaterials in Abhängigkeit der Scherrate. Das Granulatmaterial umfasst ein Bindematerial 102 (in Form von EVA), ungefähr 40 Gew.-% Füllstoffe 112 (bezogen auf die Gesamtmasse des Granulatmaterials) und ein grenzflächenaktives Material 104 in Form von Stearinsäure in einem Anteil von ungefähr 5 Gew.-%, bezogen auf eine Gesamtmasse des Bindematerials 102.

Sämtliche Scherviskositäten wurden bei 160 °C gemessen.

Aus den Graphen ist ersichtlich, dass sämtliche Granulatmaterialien, in welchen ein Weichmachermaterial oder ein grenzflächenaktives Material verwendet wurde, im Vergleich zu dem Referenzmaterial ohne Weichmachermaterial/grenzflächenaktives Matrial eine optimierte Scherviskosität aufweisen. Die Scherviskositäten der Granulatmaterialien, welche ein Weichmachermaterial/grenzflächenaktives Material umfassen, sind für sämtliche gemessene Scherraten geringer als die des Referenzmaterials. Hierdurch ist die Druckbarkeit der Granulatmaterialien optimiert.

Die Scherviskosität der Granulatmaterial gemäß der Graphen 1) bis 7) beträgt bei einer Scherrate von ungefähr 100 1/s bei 160 °C jeweils ungefähr 1,5·10³ oder weniger.

Es kann alternativ auch vorgesehen sein, dass das Granulat 100 zusätzlich mindestens ein Additiv umfasst. Hierzu kann der Anteil des Bindematerials 102 oder der Anteil der Füllstoffe 112 reduziert werden oder beides.

Wie in Figur 2 schematisch dargestellt, wird das Granulat 100 (welches beispielsweise nach dem im Zusammenhang mit Figur 1 beschriebenen Verfahren hergestellt wurde) in eine Einfüllvorrichtung 144 einer 3D-Druckvorrichtung 150 eingefüllt, wobei die Einfüllvorrichtung 144 vorliegend trichterförmig ausgebildet ist.

Vorliegend wird eine Pellet Additive Manufacturing (PAM)-3D-Druckvorrichtung verwendet.

Der Druckkopf 140 der 3D-Druckvorrichtung 150 umfasst vorliegend neben der Einfüllvorrichtung 144 ein als Extruder 152 ausgebildetes Extrusionselement, in welchem eine Schnecke 154 rotierend angeordnet ist.

Mittels einer nicht dargestellten Heizeinrichtung wird der Extruder 152 auf eine Temperatur in einem Bereich von ungefähr 130 °C und 150 °C, erwärmt und das Granulat 100 aufgeschmolzen und in der Schnecke 154 durchmischt und/oder durchgeknetet. Beispielsweise wird der Extruder 152 auf ungefähr 140 °C erwärmt und/oder der Druckkopf wird auf ungefähr 180 °C erwärmt.

Aufgrund der durch das Weichmachermaterial/grenzflächenaktive Material 104 optimierten Scherviskosität können Moleküle des Bindematerials 102 aneinander vorbeigleiten.

Über ein Applizierelement 158 wird das aufgeschmolzene und teilweise vernetzte Polymermaterial des Granulats 100 anschließend auf ein Substrat 162 aufgetragen.

Die Auftragung geschieht typischerweise in Bahnen nebeneinander, bevor eine weitere Schicht aufgetragen wird.

Vorliegend weist der Druckkopf 140 eine Druckdüse 160 auf, welche einen Durchmesser von ungefähr 0,25 mm oder mehr, insbesondere von ungefähr 0,25 mm oder mehr, aufweist.

Die Druckdüse 160 weist insbesondere einen Durchmesser von ungefähr 0,8 mm oder weniger, beispielsweise von ungefähr 0,5 mm oder weniger, auf.

Vorliegend wird mittels des zuvor beschriebenen 3D-Druckverfahrens ein Grünkörper 164 hergestellt.

In Ausführungsformen, in welchem ein Weichmachermaterial 104 verwendet wird, beispielsweise in Form von Polyethylenglykol, wird dieses vorzugsweise vor der Weiterbehandlung des Grünkörpers 164 herausgewaschen. Hierzu wird der Grünkörper vorliegend in einem Wasserbad gelegt, beispielsweise für ungefähr 6 Stunden und/oder bei ungefähr 60 °C.

Der so hergestellte Grünkörper 164 wird anschließend einer Pyrolyse unterzogen. Sie ist ein Bestandteil des schematisch in Figur 3 dargestellten Verfahrens zur Herstellung eines keramischen Bauteils 180.

Die Pyrolyse 170 erfolgt unter Sauerstoffausschluss bei relativ hohen Temperaturen für eine bestimmte Zeit, wobei bei der Pyrolyse 170 unter Sauerstoffausschluss flüchtige Bestandteile des Grünkörpers 164, welcher einen Formkörper darstellt, entfernt werden.

Vorzugsweise erfolgt die Pyrolyse 170 in einem Temperaturbereich von ungefähr 1000 °C bis ungefähr 1650 °C.

Das Ergebnis der Pyrolyse 170 ist ein offenporöser Kohlenstoffkörper 172.

Der offenporöse Kohlenstoffkörper 172 wird im Anschluss an die Pyrolyse 170 mit einem Carbidbilder 174 infiltriert.

Vorliegend wird als Carbidbildner 174 Silizium verwendet und ein LSI (Liquid Silicon Infiltration)-Verfahren durchgeführt.

Hierbei dringt das flüssige Silizium in den offenporösen Kohlenstoffkörper 172 ein und reagiert mit dem Kohlenstoff zu Siliziumcarbid. Es entsteht dabei ein keramisches Bauteil 180.

Das LSI-Verfahren wird bei ungefähr 1450 °C bis ungefähr 1650 °C durchgeführt. Es werden 200 Gew.-% Silizium bezogen auf eine Gesamtmasse des offenporösen Kohlenstoffkörpers 172 eingesetzt.

Es kann bei der Keramisierung grundsätzlich eine freie Carbidbildner-Phase (im Falle von Silizium als Carbidbildner 174 eine freie Silizium-Phase) verbleiben und es kann eine freie Kohlenstoff-Phase verbleiben, je nach Verfahrensdurchführung.

Insbesondere wird das Verfahren so durchgeführt, dass eine freie Kohlenstoff-Phase minimiert ist.

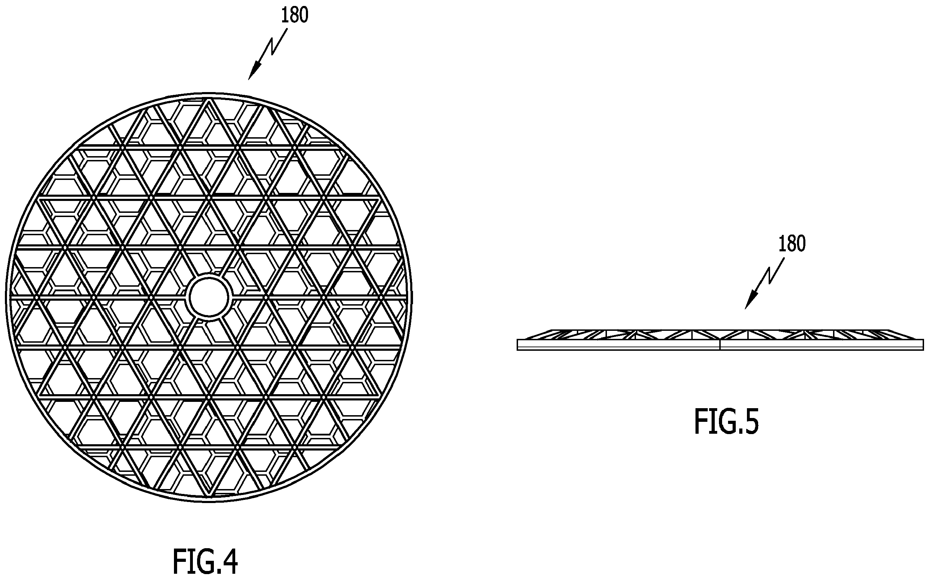

Eine Ausführungsform eines keramischen Bauteils 180 ist in den Figuren 4 und 5 dargestellt.

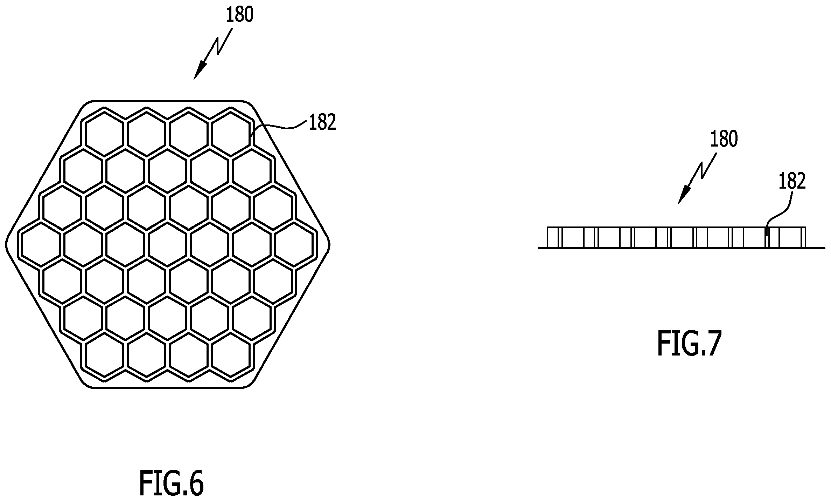

Die in den Figuren 4 und 5 dargestellte Ausführungsform eines keramischen Bauteils 180 ist zumindest näherungsweise scheibenförmig ausgebildet und weist eine Wabenstruktur auf, welche auf einer Seite des keramischen Bauteils 180 durch eine Verstärkungsstruktur verstärkt ist. Die Wabenstruktur entspricht im Wesentlichen der Wabenstruktur gemäß der weiteren Ausführungsform in den Figuren 6 und 7, weshalb diesbezüglich auf nachfolgende Ausführungen verwiesen wird.

Die Verstärkungsstruktur ist vorliegend aus einer Gitterstruktur aus miteinander verknüpften im Wesentlichen gleichseitigen Dreiecken gebildet.

Das keramische Bauteil 180 ist aufgrund der geringen Wärmeausdehnung von Siliziumcarbid insbesondere für optische Vorrichtungen geeignet.

Eine weitere Ausführungsform eines keramischen Bauteils 180 ist in den Figuren 6 und 7 dargestellt.

Wie die in den Figuren 4 und 5 dargestellte Ausführungsform ist das keramische Bauteil 180 gemäß den Figuren 6 und 7 zur Verwendung in optischen Strukturen vorgesehen.

Eine Grundwandung des keramischen Bauteils 180 weist vorliegend in einem längs einer Haupterstreckungsebene genommenen Querschnitt eine Hexagon-Form mit abgerundeten Ecken auf.

An der Grundwandung ist eine Wabenstruktur aus zu Hexagonen verbundenen Strukturwandungen angeordnet. Die Strukturwandungen erstrecken sich jeweils im Wesentlichen senkrecht von der Grundwandung weg. Die Strukturwandungen bilden Stege 182.

Einzelne Waben der Wabenstruktur weisen im Wesentlichen dieselbe Form auf. Die Strukturwandungen weisen in einer parallel zur Grundwandung angeordneten Richtung vorliegend jeweils im Wesentlichen dieselbe Länge auf.

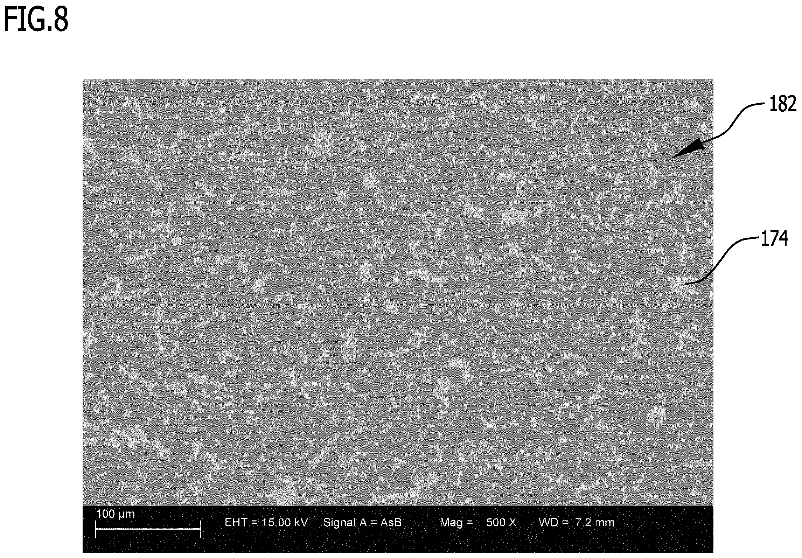

In Figur 8 ist ein Schliffbild eines keramischen Bauteils 180 gezeigt, welches gemäß den zuvor beschriebenen Ausführungsformen der Verfahren aus dem Granulat 100, hergestellt wurde.

Das Schliffbild wurde mit einem Rasterelektronenmikroskop bei einer Beschleunigungsspannung von 15 kV bei einer 500-fachen Vergrößerung aufgenommen.

In helleren Bereichen liegt reines Silizium vor. In dunkleren Bereichen liegt Siliziumcarbid vor.

Aus Figur 8 ist ersichtlich, dass eine feine Verteilung des Siliziumcarbids in dem Material des keramischen Bauteils 180 entstanden ist. Vorliegend enthält das Material nur ungefähr 10 Vol.-% freies Silizium.

Es liegt vorliegend eine homogene Verteilung von Silizium und Siliziumcarbid vor.

Eine Dichte des SiSiC-Materials beträgt vorliegend ungefähr 3 g/cm³.

Keramische Bauteile 180, welche mit dem zuvor beschriebenen Verfahren hergestellt sind, können beispielsweise in keramischen Wärmeübertragern, Widerstandsheizelementen, und Trägerstrukturen für optische Bänke und/oder als optische Teile in Satelliten verwendet werden.

### Bezugszeichenliste

- 100: Granulat
- 102: Bindematerial
- 104: Weichmachermaterial und/oder grenzflächenaktives Material
- 106: Behälter
- 108: Trichter
- 110: Extrusionsvorrichtung
- 112: Füllstoff
- 114: Doppelschneckenvorrichtung
- 116: Schneckenvorrichtung
- 118: Compoundmaterial
- 126: Pelletierer
- 130: Behälter
- 140: Druckkopf
- 144: Einfüllvorrichtung
- 150: 3D-Druckvorrichtung
- 152: Extruder
- 154: Schnecke
- 158: Applizierelement
- 160: Druckdüse
- 162: Substrat
- 164: Grünkörper
- 170: Pyrolyse
- 172: offenporöser Kohlenstoffkörper
- 174: Carbidbildner
- 176: Infiltrieren
- 180: keramisches Bauteil
- 182: Steg

## Patentansprüche

1. Verfahren zur Herstellung eines Granulats (100), das Verfahren umfassend:
- Mischen eines Bindematerials (102), eines Weichmachermaterials und/oder eines grenzflächenaktiven Materials (104) und eines oder mehrerer Füllstoffe (112), wobei ein Compoundmaterial entsteht;
- Extrusion des Compoundmaterials (118);
- Zerkleinerung des extrudierten Compoundmaterials (118) unter Ausbildung des Granulats (100).

2. Verfahren nach Anspruch 1, **dadurch gekennzeichnet, dass** das Weichmachermaterial (104) Polyethylenglykol umfasst oder daraus gebildet ist und/oder dass das grenzflächenaktive Material (104) Stearinsäure umfasst oder daraus gebildet ist, und insbesondere
**dadurch gekennzeichnet, dass** Polyethylenglykol eine Molekülmasse von ungefähr 200 g/mol oder mehr und/oder ungefähr 6000 g/mol oder weniger aufweist.

3. Verfahren nach einem der vorangehenden Ansprüche, **dadurch gekennzeichnet, dass** ein Bindematerialgranulat verwendet wird und/oder dass das Weichmachermaterial und/oder das grenzflächenaktive Material (104) ein Coating an und/oder auf dem Bindematerial (102) bildet.

4. Verfahren nach einem der vorangehenden Ansprüche, **gekennzeichnet durch** mindestens eines der Folgenden:
- ein Anteil des Weichmachermaterials und/oder des grenzflächenaktiven Materials (104) beträgt ungefähr 1 Gew.-% oder mehr und/oder ungefähr 5 Gew.-% oder weniger, bezogen auf eine Gesamtmasse des Bindematerials (102);
- das Weichmachermaterial und/oder das grenzflächenaktive Material (104) wird in einem Lösungsmittel oder Lösungsmittelgemisch gelöst, bevor es mit dem Bindematerial (102) vermischt wird, und/oder eine Mischung aus dem Bindematerial (102) und dem Weichmachermaterial und/oder dem grenzflächenaktiven Material (104) wird getrocknet, wobei ein Coating aus dem Weichmachermaterial und/oder dem grenzflächenaktiven Material (104) ausgebildet wird.

5. Verfahren nach einem der vorangehenden Ansprüche, **dadurch gekennzeichnet, dass** das Bindematerial (102) ein thermoplastisches Polymermaterial, insbesondere ein Ethylen-Vinylacetat-Copolymer (EVA), umfasst oder daraus gebildet ist, wobei vorzugsweise ein Anteil des Bindematerials (102) ungefähr 20 Gew.-% oder mehr und/oder ungefähr 35 Gew.-% oder weniger beträgt, bezogen auf eine Gesamtmasse des Granulats (100).

6. Verfahren nach einem der vorangehenden Ansprüche, **gekennzeichnet durch** mindestens eines der Folgenden:
- der eine oder die mehreren Füllstoffe (112) sind ausgewählt aus einem oder mehreren der folgenden Materialien: Carbon Black, pulverförmiges Siliziumcarbid (SiC), Kohlenstofffasern, Aktivkohle;
- der eine oder einer oder mehrere der Füllstoffe (112) sind Nanofüllstoffe und/oder Mikrofüllstoffe, welche einen mittleren Durchmesser von ungefähr 60 µm oder weniger aufweisen.

7. Verfahren nach einem der vorangehenden Ansprüche, **dadurch gekennzeichnet, dass** das Granulat (100) die folgenden Substanzen umfasst oder daraus gebildet ist: ein Ethylen-Vinylacetat-Copolymer (EVA), Carbon Black, pulverförmiges Siliziumcarbid (SiC), gemahlene Kohlenstofffasern, Aktivkohle, das Weichmachermaterial und/oder das grenzflächenaktive Material (104).

8. Verfahren nach einem der vorangehenden Ansprüche, **dadurch gekennzeichnet, dass** zur Herstellung des Compoundmaterials (118) dessen polymere Bestandteile in einer aufgeheizten Schneckenvorrichtung (116) aufgeschmolzen und/oder sämtliche Bestandteile des Compoundmaterials (118) in einer Extrusionsvorrichtung (110) miteinander vermischt werden.

9. Verfahren nach einem der vorangehenden Ansprüche, **dadurch gekennzeichnet, dass** eine Scherviskosität eines Granulatmaterials bei einer Scherrate von ungefähr 100 1/s bei 160 °C ungefähr 1,5·10³ oder weniger beträgt.

10. Granulat (100) für 3D-Druckverfahren, wobei das Granulat (100) ein Bindematerial (102), ein Weichmachermaterial und/oder ein grenzflächenaktives Material (104) und einen oder mehrere Füllstoffe (118) umfasst oder daraus gebildet ist, hergestellt nach einem Verfahren nach Anspruch 1 bis 9.

11. 3D-Druckverfahren, insbesondere zur Herstellung eines Grünkörpers (164) für eine Keramisierung, das 3D-Druckverfahren umfassend:
- Herstellen eines Granulats (100) nach einem der Ansprüche 1 bis 9 oder Verwendung eines Granulats (100) nach Anspruch 10; und
- 3D-Drucken des Granulats (100) in einem additiven Verfahren, wobei ein Formkörper, insbesondere ein Grünkörper (164) für eine Keramisierung, gebildet wird.

12. 3D-Druckverfahren nach Anspruch 11, **gekennzeichnet durch** mindestens eines der Folgenden:
- das 3D-Drucken wird mittels einer 3D-Druckvorrichtung (150) durchgeführt, welche einen Druckkopf (140) umfasst, und das Granulat (100) wird in den Druckkopf (140) eingefüllt und wird zum 3D-Drucken mittels eines Extrusionselements (152), welches in dem Druckkopf (140) angeordnet ist, aufgeschmolzen;
- das 3D-Drucken wird mittels eines extrusionsbasierten Verfahrens durchgeführt, wobei vorzugsweise eine Druckdüse einen Durchmesser von ungefähr 0,2 mm bis ungefähr 0,8 mm, insbesondere von ungefähr 0,25 mm bis ungefähr 0,5 mm, aufweist.

13. Verfahren zur Herstellung eines keramischen Bauteils (180), umfassend:
- Herstellen eines Grünkörpers (164) gemäß einem 3D-Druckverfahren nach Anspruch 11 oder 12;
- Pyrolysieren des Grünkörpers (164), wobei ein offenporöser Kohlenstoffkörper (172) resultiert; und
- Durchführen einer Keramisierung an dem aus der Pyrolyse resultierenden offenporösen Kohlenstoffkörper (172).

14. Verfahren nach Anspruch 13, **dadurch gekennzeichnet, dass** eine Masse des offenporösen Kohlenstoffkörpers (172) nach der Pyrolyse ungefähr 50 Gew.-% oder mehr der Masse des Grünkörpers (164) vor der Pyrolyse beträgt.

15. Verfahren nach Anspruch 13 oder 14, **dadurch gekennzeichnet, dass** der offenporöse Kohlenstoffkörper (172) zur Keramisierung in einem 170 Gew.-%igen bis 200 Gew.-%igen Überschuss, bezogen auf die Masse des offenporösen Kohlenstoffkörpers (172), mit einem Carbidbildner (174), insbesondere Silizium, in Kontakt gebracht wird, wobei der offenporöse Kohlenstoffkörper (172) vorzugsweise mit dem Carbidbildner (174), insbesondere Silizium, infiltriert wird.

16. Keramisches Bauteil (180), hergestellt nach einem Verfahren nach einem der Ansprüche 13 bis 15, wobei insbesondere ein Anteil an Carbid in dem keramischen Bauteil (180) ungefähr 70 Volumen-% oder mehr, insbesondere ungefähr 75 Volumen-% oder mehr, bezogen auf ein Gesamtvolumen des keramischen Bauteils (180) beträgt.
